# EUROPÄISCHE PATENTANMELDUNG

(11) **EP 2 210 805 A2**
(43) Veröffentlichungstag der Anmeldung: **28.07.2010**
(21) Anmeldenummer: 10151301.8
(22) Anmeldetag: 21.01.2010
(51) Int. Cl.: B62K 25/02, B62M 9/125

(54) **Fahrradachsbefestigungssystem**

(30) Priorität: 23.01.2009 DE 202009000904 U; 14.05.2009 DE 202009004819 U
(71) Anmelder: Rose Versand GmbH, 46395 Bocholt (DE)
(72) Erfinder: Heimerdinger, Andreas, 76597 Loffenau (DE)
(74) Vertreter: Kluin, Jörg-Eden

(57) **Zusammenfassung**

Fahrradachsbefestigungssystem zur Befestigung von Laufradachsen an Ausfallenden (2), bei dem die Ausfallenden (2) zu Schnellspannachsen und Steckachsen kompatibel sind, indem jedes Ausfallende (2) eine Bohrung (4) aufweist, und mindestens eine dieser Bohrungen (4) einen Durchmesser aufweist, der geringfügig größer als der Durchmesser einer Steckachse ist und jedes Ausfallende (2) einen zur Innenseite (5) des Ausfallendes (2) offenen Kanal (7) aufweist, der bis an einen Rand des Ausfallendes (2) durchgeht.

## Beschreibung

Die Erfindung betrifft ein Fahrradachsbefestigungssystem zur Befestigung von Laufradachsen an Ausfallenden. Es sind Fahrradlaufräder mit verschiedenartigen Achsen auf dem Markt. Weit verbreitet sind beispielsweise Achsen, die mittels eines durch diese gesteckten Schnellspanners an den Ausfallenden eines Fahrradrahmens befestigt werden (Schnellspannachsen). Der Begriff "Ausfallende" wird im Rahmen dieser Druckschrift sowohl für die hinteren Aufnahmen der Radachse, als auch - in einer weiten Verwendung des Begriffes - für die Enden der Gabel, also die vorderen Achsaufnahmen verwendet.

Die Ausfallenden zur Befestigung einer Schnellspannachse weisen üblicher Weise einen Schlitz auf, durch den die aus der Nabe hervorstehenden Enden der Achse eingeführt und anschließend mit dem Schnellspanner verspannt werden. Insbesondere aus dem Mountainbikebereich sind jedoch beispielsweise auch so genannte "Steckachsen" bekannt, bei denen eine Achse erst nach dem korrekten Anordnen des Laufrades zwischen den Ausfallenden durch die Ausfallenden und das Laufrad gesteckt wird. Die hierfür geeigneten Ausfallenden weisen üblicher Weise keinen Schlitz auf und sind daher zur Befestigung von Schnellspannachsen nicht geeignet. Ein Fahrradachsbefestigungssystem ist daher üblicher Weise nur für eine Art von Laufradachsen geeignet. Der Einbau eines Laufrades mit einer andersartigen Achse ist daher nicht oder nur mit erheblichem Aufwand möglich.

Die Erfindung hat es sich zur Aufgabe gemacht, ein Fahrradachsbefestigungssystem ohne diesen Nachteil zu schaffen.

Diese Aufgabe wird durch das in Anspruch 1 wiedergegebene Fahrradachsbefestigungssystem gelöst. Bei dem erfindungsgemäßen Fahrradachsbefestigungssystem sind die Ausfallenden zu verschiedenen Laufradachsen kompatibel. Der Nutzer muss sich daher nicht bereits bei dem Kauf des Fahrrades auf eine Art von Achsen festlegen, sondern er kann die vorhandenen Laufräder jederzeit durch Laufräder mit andersartigen Achsen ersetzen.

Die Ausfallenden sind zu Schnellspannachsen und zu Steckachsen kompatibel. Da mit Steckachsen unter anderem eine hohe Steifigkeit der Gabel oder des Hinterbaus des Rahmens erzielt wird, diese jedoch nicht so bekannt und verbreitet wie die Schnellspannachsen sind, ist ein Fahrradachsbefestigungssystem, welches zu diesen beiden Arten von Achsen kompatibel ist, für einen Nutzer besonders attraktiv.

Jedes Ausfallende weist eine Bohrung auf, und mindestens eine dieser Bohrungen weist einen Durchmesser auf, der geringfügig größer als der Durchmesser einer Steckachse ist.

Jedes Ausfallende weist einen zur Innenseite des Ausfallendes offenen Kanal auf, der bis an einen Rand des Ausfallendes durchgeht.

In der bevorzugten Ausführungsform sind Adapter vorgesehen, die eine Anpassung der Ausfallenden an die jeweilige Achs-Art ermöglichen.

Vorzugsweise umfasst das Fahrradachsbefestigungssystem Adapter, die für die Anpassung der Ausfallenden an eine Schnellspannachse einen Schlitz aufweisen, dessen Breite bevorzugt geringfügig größer als der Durchmesser der Schnellspannachse vorgesehen ist.

Vorzugsweise umfasst das Fahrradachsbefestigungssystem Adapter, die für die Anpassung der Ausfallenden an eine Steckachse eine Bohrung aufweisen, deren Durchmesser zumindest in etwa dem Durchmesser der oben genannten Bohrung in den Ausfallenden entspricht, also geringfügig größer als der Durchmesser einer Steckachse ist. Die Adapter werden bevorzugt derart angeordnet, dass ihre Bohrungen mit den Bohrungen der Ausfallenden fluchten. Auf diese Weise ergibt sich eine durchgehende Bohrung mit zumindest nahezu gleich bleibendem Durchmesser.

Da Stechachsen mit verschiedenen Durchmessern auf dem Markt sind, ist es denkbar, die Bohrung der Ausfallenden so groß wie den Durchmesser der dicksten verbreiteten Steckachse vorzusehen. Zur Anpassung der Ausfallenden an eine Steckachse kleineren Durchmessers kann der Adapter in dieser Ausführungsform eine durchgehende Distanzhülse umfassen.

Vorzugsweise sind die Adapter mit den Ausfallenden verschraubbar vorgesehen.

Die Dicke der Ausfallenden ist vorzugsweise größer als die Länge, um die die Anschläge einer Schnellspannachse, mit denen diese an Anlageflächen der Ausfallenden anliegt, üblicherweise von den Enden der Achse entfernt sind.

In der bevorzugten Ausführungsform geht die Bohrung in den Ausfallenden in dem der Innenseite der Ausfallenden zugewandten Bereich in eine Ausnehmung über, die zur Aufnahme der Adapter vorgesehen ist. Der Übergang erfolgt bevorzugt in einer Stufe. Die Bohrung durchbricht das Ausfallende zusammen mit der Ausnehmung bevorzugt vollständig. Die Ausnehmung ist bevorzugt tiefer als 3,5 mm.

Die Ausnehmung bildet auf der Innenseite der Ausfallenden bevorzugt einen zur Innenseite der Ausfallenden offenen Kanal, der bis an einen Rand des Ausfallendes durchgeht. Hierdurch ist eine Voraussetzung dafür geschaffen, sowohl eine besonders geeignete Befestigungsmöglichkeit für eine Steckachse, als auch eine Einführ- und Befestigungsmöglichkeit für eine Schnellspannachse zu schaffen.

In der bevorzugten Ausführungsform weist das Fahrradachsbefestigungssystem im Bereich der Bohrung der Ausfallenden einander zugewandte Anlageflächen auf, die jeweils um geringfügig mehr als 3,5 mm näher an dem gegenüberliegenden Ausfallende, als die Böden der Kanäle angeordnet sind. Die Kanäle sind also geringfügig tiefer als 3,5 mm. Der Abstand der Anlageflächen zueinander entspricht bevorzugt dem Einbaumaß eines üblichen Laufrades mit Schnellspannachse. Hierdurch sind Anlageflächen geschaffen, die zum Einbau einer üblichen Schnellspannachse geeignet sind. Die Enden der Schnellspannachse stehen oft um etwa 3,5 mm aus den Achsanschlägen hervor. Daher können sie durch den Kanal eingeführt werden und die Achsanschläge können an den Anlageflächen verspannt werden.

Die Anlageflächen sind bevorzugt groß genug, um die von den Laufrädern auf die Ausfallenden übertragenen Kräfte aufzunehmen. Vorzugsweise ragen die Anlageflächen jedenfalls bei einer montierten Schnellspannachse zumindest nahezu an diese heran. Dies führt zumindest bei einer Schnellspannachse dazu, dass deren Achsanschläge nicht etwa zunächst einen nicht unerheblichen Bereich in radialer Richtung überbrücken müssen.

Bevorzugt sind die Adapter jeweils in die Ausnehmung auf der Innenseite der Ausfallenden einbringbar.

Vorzugsweise sind die Adapter jeweils formschlüssig in die Ausnehmung einbringbar.

Eine besonders günstige Kraftübertragung zwischen Ausfallenden und Adaptern ergibt sich, wenn die Adapter, wie bevorzugt, auf der Innenseite bündig mit den Ausfallenden abschließen.

In einer Ausführungsform sind die Adapter so vorgesehen, dass ihre äußere Kontur vollständig der Kontur der Ausnehmung entspricht.

Vorzugsweise erstreckt sich die Ausnehmung auf der Innenseite der Ausfallenden zumindest auch um die Bohrung in den Ausfallenden herum. Besonders bevorzugt erstreckt sich die Ausnehmung auf der Innenseite der Ausfallenden kreisförmig um die Bohrung herum. Hierdurch wird eine Voraussetzung dafür geschaffen, dass sich auch die Adapter um die Bohrung herum erstrecken und auf diese Weise die Anlageflächen durch die Adapter gebildet werden. Dies hat unter anderem den Vorteil, dass bei etwaigen Beschädigungen der Anlageflächen die Adapter ausgetauscht werden können. Zudem können die Adapter aus einem härteren Material als die Ausfallenden gefertigt sein, um derartige Beschädigungen bei nur geringem Gewichtszuwachs zu vermeiden.

In der Ausführungsform, bei der die Adapter für die Anpassung der Ausfallenden an eine Steckachse eine Bohrung aufweisen, deren Durchmesser zumindest in etwa dem Durchmesser der Bohrung in den Ausfallenden entspricht, die im Durchmesser geringfügig größer, als der Durchmesser einer Steckachse ist, füllen die Adapter die Ausnehmung -besonders bevorzugt- im übrigen vollständig aus. Auf diese Weise ist der zur Einführung der Schnellspannachse erforderliche Kanal geschlossen und es wird eine optimale Anlagefläche für das Laufrad mit Steckachse gebildet.

In der bevorzugten Ausführungsform weist der Schlitz des Adapters für die Anpassung der Ausfallenden an eine Schnellspanachse zwei zueinander planparallele Seitenwände auf. Diese Wände gehen im eingebauten Zustand der Adapter bevorzugt zumindest bei dem der Kettenseite gegenüberliegenden Ausfallende in die Seitenwände des in den Ausfallenden angeordneten Kanals über. Hierdurch können die Achsüberstände der Schnellspannachse problemlos durch den zumindest nahezu stufenlosen Kanal eingeführt werden.

In der bevorzugten Ausführungsform weist die Ausnehmung eine kreisförmige Ausbuchtung auf, deren Durchmesser bevorzugt kleiner als der Durchmesser der Bohrung ist. Wenn die Adapter diese Ausbuchtung, wie bevorzugt, ausfüllen, dann führt die durch die Ausbuchtung erzielte unrunde Form der Ausnehmung zu einer Verbesserung des Formschlusses zwischen den Ausfallenden und den Adaptern. Zudem ergibt sich eine besonders geeignete Befestigungsmöglichkeit der Adapter.

Besonders bevorzugt sind die Adapter durch eine Schraube in dem Bereich der Ausbuchtung der Ausnehmung mit dem Ausfallende verschraubbar. Auf diese Weise wird die Anlagefläche nicht durch die Verschraubung beeinträchtigt.

In der bevorzugten Ausführungsform umfasst das Fahrradachsbefestigungssystem ein Schaltauge und das Schaltauge ist einstückig mit einem der Adapter ausgebildet. Hierdurch wird auf besonders effiziente Art ein austauschbares Schaltauge geschaffen.

Vorzugsweise ist der das Schaltauge aufweisende Adapter mit zwei Schrauben mit dem Ausfallenden verschraubbar. Hierdurch können auf das Schaltauge wirkende Kippkräfte gut auf das Ausfallende übertragen werden.

In der bevorzugten Ausführungsform ist ein ein Außengewinde aufweisender Einsatz (Gewindeeinsatz) vorgesehen, der mit einem Ausfallende verschraubbar ist.

Der Gewindeeinsatz weist bevorzugt eine Bohrung auf, die besonders bevorzugt als Gewindebohrung ausgebildet ist.

In der bevorzugten Ausführungsform weist lediglich der Adapter für die Anpassung des der Kettenseite gegenüberliegenden Ausfallendes an eine Steckachse eine Bohrung auf, deren Durchmesser zumindest in etwa dem Durchmesser der Bohrung in dem Ausfallende entspricht, die im Durchmesser geringfügig größer, als der Durchmesser einer Steckachse ist und der gegenüberliegende Adapter weist stattdessen eine größere Bohrung auf und wird von dem Gewindeeinsatz durchgriffen. Der Gewindeeinsatz bildet in dieser Ausführungsform gleichzeitig die Anlagefläche.

Vorzugsweise weist lediglich ein einziges Ausfallende, bevorzugt das der Kettenseite gegenüberliegende Ausfallende, eine Bohrung auf, deren Durchmesser geringfügig größer, als der Durchmesser einer Steckachse ist. Das gegenüberliegende Ausfallende weist bevorzugt eine größere Bohrung, bevorzugt eine Gewindebohrung auf. Diese größere Bohrung ist bevorzugt von dem Gewindeeinsatz durchgriffen, besonders bevorzugt ist sie von dem Gewindeeinsatz durchschraubt.

Viele Achs-Arten umfassen ein Außengewinde, mit dessen Hilfe sie an den Ausfallenden befestigbar sind. In der bevorzugten Ausführungsform sind verschiedene Gewindeeinsätze vorgesehen, deren Gewindebohrungen komplementär zu diesen verschiedenen Außengewinden sind. Auf diese Weise kann durch Auswahl eines geeigneten Gewindeeinsatzes sehr effizient auf die verschiedenen Außengewinde der verschiedenen Achsen reagiert werden.

Es sind auch Einsätze mit einem Außengewinde und Bohrungen verschiedener Durchmesser ohne Gewinde denkbar, um die Ausfallenden zu Achsarten kompatibel zu machen, die kein in die Ausfallenden integriertes Innengewinde benötigen. Hierdurch wird es beispielsweise auch möglich, den Schnellspanner lediglich durch den Einsatz hindurch zu stecken und auf der Außenseite der Ausfallenden wie üblich mit einer Mutter zu verschrauben.

Die Erfindung soll nun an Hand von in den Zeichnungen gezeigten Ausführungsbeispielen näher erläutert werden. Es zeigen:
- Fig. 1: eine perspektivische Ansicht eines erfindungsgemäßen Ausfallendes eines Fahrradhinterbaus mit einem für eine Steckachse geeigneten Adapter, mit Blick auf die Innenseite des Ausfallendes;
- Fig. 2: eine perspektivische Ansicht eines kettenseitigen erfindungsgemäßen Ausfallendes mit Schaltauge und einem für eine Steckachse geeigneten Gewindeeinsatz, mit Blick auf die Außenseite des Ausfallendes;
- Fig. 3: eine Ansicht wie in Fig. 2 mit Blick auf die Innenseite des Ausfallendes;
- Fig. 4: eine Ansicht wie in Fig. 1 mit Blick auf die Außenseite des Ausfallendes;
- Fig. 5: eine perspektivische Darstellung eines der Kettenseite gegenüberliegenden erfindungsgemäßen Ausfallendes mit einem für eine Schnellspannachse geeigneten Adapter und mit Blick auf die Innenseite des Ausfallendes;
- Fig. 6: eine perspektivische Darstellung eines kettenseitigen erfindungsgemäßen Ausfallendes mit Schaltauge und einem für eine Schnellspannachse geeigneten Gewindeeinsatz;
- Fig. 7: eine Darstellung wie in Fig. 6 mit Blick auf die Innenseite des Ausfallendes;
- Fig. 8: eine Darstellung wie in Fig. 5 mit Blick auf die Außenseite des Ausfallendes;
- Fig. 9: eine perspektivische Darstellung eines Ausschnitts eines Fahrradhinterbaus mit noch nicht montierter Steckachse und noch nicht montiertem Gewindeeinsatz;
- Fig. 10: eine perspektivische Darstellung einer bekannten Schnellspannachse mit Nabe;
- Fig. 11: eine perspektivische Ansicht eines bekannten Schnellspanners.

Das gezeigte erfindungsgemäße Fahrradachsbefestigungssystem umfasst zwei Ausfallenden 2, 2', die eine Bohrung 4, 4a aufweisen, die im Bereich der Innenseiten 5 der Ausfallenden 2,2' in eine Ausnehmung 6 übergeht, sowie Adapter 11, 11', 11a, 11a'.

Die Ausfallenden 2, 2' sind Teil eines gefederten Hinterbaus eines Fahrradrahmens.

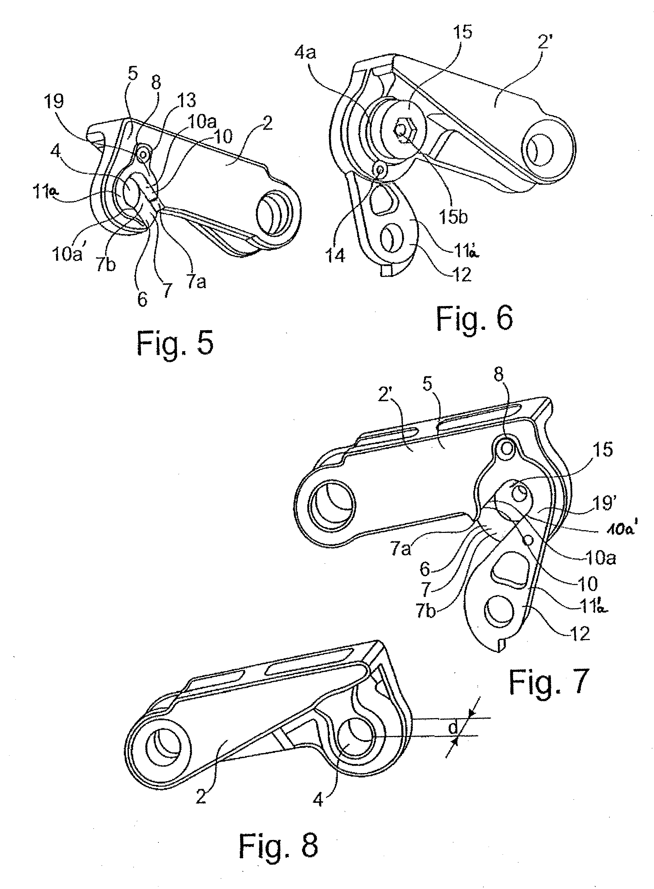

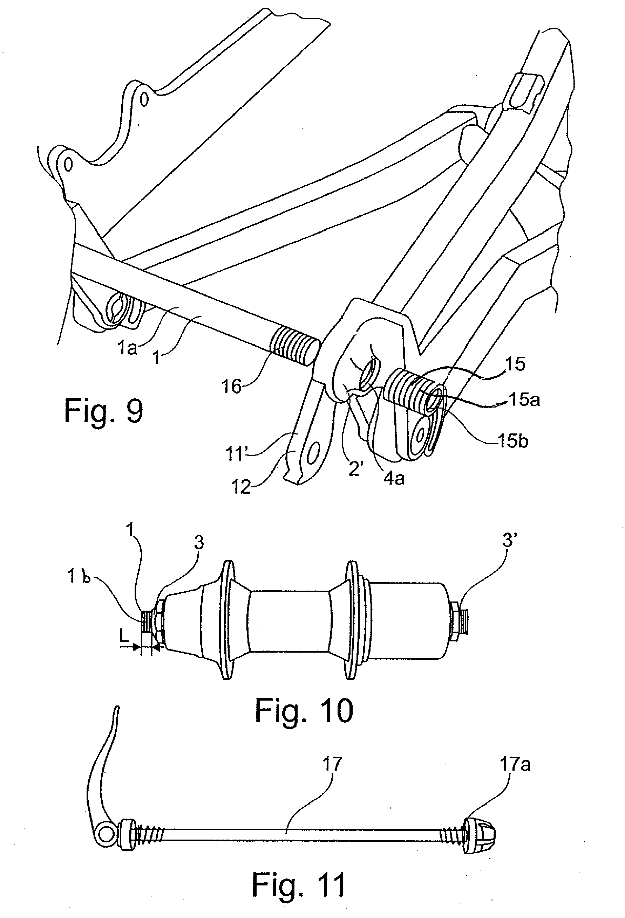

Die Dicke d der Ausfallenden 2, 2' (Fig. 8) ist größer als die Länge l des Achsüberstandes einer Schnellspannachse (Fig. 10).

Die Ausnehmung 6 erstreckt sich zum einen um die Bohrung 4, 4a herum und bildet zum anderen einen Kanal 7, (Fig. 5) der bis zum Rand der Ausfallenden 2,2' durchgezogen ist.

Die Adapter 11, 11', 11a, 11a' füllen die Ausnehmung 6 formschlüssig und mit der Innenseite 5 der Ausfallenden bündig abschließend aus.

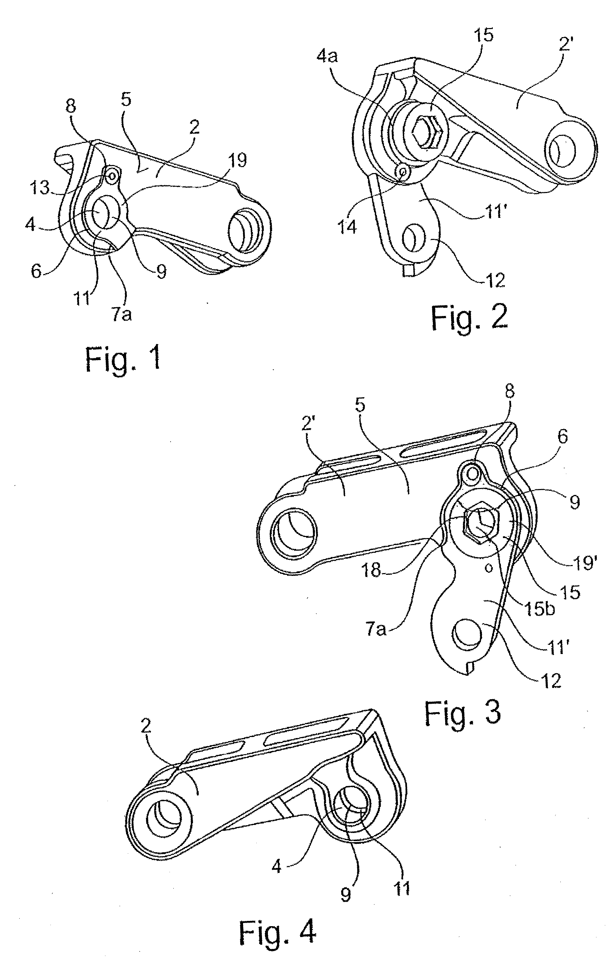

Fig. 1 zeigt das der Kettenseite gegenüberliegende Ausfallende 2, welches einen für eine Steckachse 1a geeigneten Adapter 11 aufweist, der mit einer Schraube 13 im Bereich einer Ausbuchtung 8 der Ausnehmung 6 mit dem Ausfallende 2 verschraubt ist. Das Ausfallende 2 weist eine Bohrung 4 auf, deren Durchmesser geringfügig größer, als der Durchmesser der Steckachse 1a ist. Dieser Adapter 11 füllt die Ausnehmung 6 vollständig aus und weist eine Bohrung 9 auf, die den gleichen Durchmesser wie diese Bohrung 4 des Ausfallendes aufweist und stufenlos in diese übergeht.

Die Fig. 2 und 3 zeigen die Kettenseite eines Ausfallendes 2' mit einem für eine Steckachse 1a geeigneten Adapter 11'. Aus Fig. 3 ist zu sehen, dass der Kanal 7 der Ausnehmung 6 breiter ist, als in dem gegenüberliegenden Ausfallende 2. Die Ausnehmung 6 wird vollständig formschlüssig und auf der Innenseite 5 bündig abschließend von dem Adapter 11' ausgefüllt, der gleichzeitig das Schaltauge 12 bildet. Der Adapter 11' ist mit einer nicht gezeigten Schraube im Bereich der Ausbuchtung 8 und einer Schraube 14 mit dem Ausfallende 2' verschraubt. In diesem Ausfallende 2' ist zudem ein Gewindeeinsatz 15 vorgesehen, der mit seinem Außengewinde 15a in eine komplementäre Gewindebohrung 4a des Ausfallendes 2' geschraubt ist. Der für eine Steckachse geeignete Gewindeeinsatz 15 weist eine Gewindebohrung 15b auf, welche komplementär zu dem Außengewinde 16 einer Steckachse 1a ist. Der für eine Steckachse geeignete, kettenseitige Adapter 11' weist eine Bohrung 9 auf, die so groß ist, dass sie von dem Gewindeeinsatz 15 durchgriffen wird (Fig. 3). Bei der Bohrung 9 in dem auch das Schaltauge 12 bildenden Adapter 11' kann es sich um eine Gewindebohrung handeln und der Adapter 11' kann mit dem Gewindeeinsatz 15 verschraubt sein. Eine Anlagefläche 19,19' für das Laufrad mit Steckachse wird auf der Kettenseite durch den Gewindeeinsatz 15 und auf der gegenüberliegenden Seite durch den Adapter 11 gebildet.

Fig. 5 und 7 zeigen, dass die für eine Schnellspannachse 1 b geeigneten Adapter 11a, 11a' Schlitze 10 aufweisen, welche zueinander planparallele Seitenwände 10a, 10a' aufweisen. Bei dem der Kettenseite gegenüberliegenden Ausfallende 2 gehen diese Seitenwände 10a, 10a' stufenlos in die Seitenwände 7a des Kanals 7 des Ausfallendes 2 über. Die Tiefe des Kanals 7 ist geringfügig größer als 3,5 mm, so dass die Achsüberstände einer gewöhnlichen Schnellspannachse 1 b durch den Kanal 7 geführt werden können.

Wie Fig. 7 zeigt, werden die Seitenwände des Schlitzes bzw. Kanals auf der Kettenseite zumindest nahezu vollständig durch den Adapter 11a' gebildet. Es ist denkbar, dass die Seitenwände des Schlitzes bzw. Kanals auf der Kettenseite vollständig durch den Adapter 11a' gebildet werden.

Die Anlageflächen 19,19' für die Achsanschläge 3, 3' der Schnellspannachse 1 b werden auf der Kettenseite durch den auch das Schaltauge 12 bildenden Adapter 11a' und auf der gegenüberliegenden Seite durch den dort angeordneten Adapter 11a gebildet.

Der für eine Schnellspannachse geeignete Gewindeeinsatz 15 weist eine Gewindebohrung 15b auf, welche komplementär zu dem Außengewinde 17a eines Schnellspanners 17 ist.

Die Innenseiten 5 der Ausfallenden und damit die Anlageflächen 19,19' sind in allen gezeigten Ausführungsbeispielen etwa 135 mm voneinander entfernt und entsprechen damit dem Einbaumaß vieler Laufräder (hinten) sowohl mit Schnellspannachsen als auch mit Steckachse.

Alle gezeigten Einsätze 15 weisen Stellflächen 18 zum Ansatz eines Drehwerkzeugs auf (beispielsweise Inbus).

Die Ausfallenden 2, 2' können aus Aluminium gefertigt sein. Der Geindeeinsatz 15 und die Adapter 11, 11', 11a, 11a' können Stahl umfassen.

Es ist denkbar, insbesondere für eine Steckachse geeignete Einsätze 15 vorzusehen, bei denen die Gewindebohrung 15b geringfügig exzentrisch angeordnet ist. Hierdurch ist eine Justierung des Laufrades möglich.

Es ist denkbar, auf der Innenseite zumindest eines der für eine Steckachse 1a geeigneten Adapter 11, 11' eine nach innen vorstehenden Kulisse mit einem Einführschlitz vorzusehen, welche die korrekte Positionierung des Steckachs-Laufrades vor dem Einführen der Steckachse 1a erleichtert.

Wenn ein Austausch eines Laufrades mit Schnellspannachse 1 b gegen ein Laufrad mit Steckachse 1a gewünscht ist, so ist es lediglich erforderlich, die beiden Adapter 11a, 11a' und den Gewindeeinsatz 15 auszutauschen. Auch eine etwaige Beschädigung der Anlageflächen 19,19' kann durch Austausch des entsprechenden Adapters 11, 11a, 11a' beziehungsweise Gewindeeinsatzes 15 schnell behoben werden.

Indem die Ausfallenden 2, 2' des Fahrradachsbefestigungssystems, wie gezeigt, einerseits mindestens eine, zu einer Steckachse 1a komplementäre Bohrung 4 aufweisen und andererseits einen Kanal 7 für eine Schnellspannachse 1 b, der den Einführschlitz in herkömmlichen für eine Schnellspannachse geeigneten Ausfallenden ersetzt, ist das Fahrradachsbefestigungssystem für diese beiden sehr attraktiven Arten von Laufradachsen besonders geeignet.

### Bezuaszeichenliste:

- 1: Laufradachse
- 1a: Steckachse
- 1b: Schnellspannachse
- 2, 2': Ausfallende
- 3, 3': Achsanschläge einer Schnellspannachse
- 4: Bohrung der Ausfallenden
- 4a: Gewindebohrung des Ausfallendes
- 5: Innenseiten der Ausfallenden
- 6: Ausnehmung der Ausfallenden
- 7: Kanal
- 7a: Seitenwände des Kanals
- 7b: Boden des Kanals
- 8: Ausbuchtung
- 9: Adapterbohrung
- 10: Schlitz
- 10a,10a': Seitenwände des Schlitzes
- 11, 11': Adapter für eine Steckachse
- 11a, 11a': Adapter für eine Schnellspannachse
- 12: Schaltauge
- 13: Schraube
- 14: Schraube
- 15: Gewindeeinsatz
- 15a: Außengewinde des Gewindeeinsatzes
- 15b: Gewindebohrung des Gewindeeinsatzes
- 16: Außengewinde der Steckachse
- 17: Schnellspanner
- 17a: Außengewinde des Schnellspanners
- 18: Stellflächen
- 19,19': Anlageflächen
- d: Dicke
- l: Länge

## Patentansprüche

1. Fahrradachsbefestigungssystem zur Befestigung von Laufradachsen (1, 1a, 1 b) an Ausfallenden (2, 2'), **dadurch gekennzeichnet, dass** die Ausfallenden (2, 2') zu Schnellspannachsen (1 b) und Steckachsen (1a) kompatibel sind, indem jedes Ausfallende (2,2') eine Bohrung (4, 4a) aufweist, und mindestens eine dieser Bohrungen (4) einen Durchmesser aufweist, der geringfügig größer als der Durchmesser einer Steckachse (1a) ist und jedes Ausfallende (2, 2') einen zur Innenseite (5) des Ausfallendes (2, 2') offenen Kanal (7) aufweist, der bis an einen Rand des Ausfallendes (2, 2') durchgeht.

2. System nach Anspruch 1, **dadurch gekennzeichnet, dass** es Adapter (11a, 11a') umfasst, die für die Anpassung der Ausfallenden (2, 2') an eine Schnellspannachse (1 b) einen Schlitz (10) aufweisen, dessen Breite geringfügig größer als der Durchmesser der Schnellspannachse (1 b) ist.

3. System nach Anspruch 1, **dadurch gekennzeichnet, dass** es Adapter (11, 11') umfasst, die für die Anpassung der Ausfallenden (2, 2') an eine Steckachse (1a) eine Bohrung (9) aufweisen, deren Durchmesser zumindest in etwa dem Durchmesser der Bohrung (4) in den Ausfallenden (2, 2'), entspricht, die im Durchmesser geringfügig größer, als der Durchmesser einer Steckachse (1a) ist.

4. System nach einem der Ansprüche 1 bis 3, **dadurch gekennzeichnet, dass** die Adapter (11, 11', 11a, 11a') mit den Ausfallenden (2, 2') verschraubbar vorgesehen sind.

5. System nach einem der Ansprüche 1 bis 4, **dadurch gekennzeichnet, dass** die Bohrung (4, 4a) in den Ausfallenden (2, 2') in dem der Innenseite (5) der Ausfallenden (2, 2') zugewandten Bereich in eine Ausnehmung (6) übergeht, die zur Aufnahme der Adapter (11, 11', 11a, 11a') vorgesehen ist.

6. System nach Anspruch 5, **dadurch gekennzeichnet, dass** die Ausnehmung (6) einen zur Innenseite (5) des Ausfallendes (2, 2') offenen Kanal (7) bildet, der bis an einen Rand des Ausfallendes (2, 2') durchgeht.

7. System nach einem der Ansprüche 1 bis 6, **dadurch gekennzeichnet, dass** das Fahrradachsbefestigungssystem im Bereich der Bohrung (4, 4a) der Ausfallenden (2,2') einander zugewandte Anlageflächen (19, 19') aufweist, die jeweils um geringfügig mehr als 3,5 mm näher an dem gegenüberliegenden Ausfallende (2,2') als die Böden (7b) der Kanäle (7) angeordnet sind und deren Abstand zueinander dem Einbaumaß eines üblichen Laufrades mit Schnellspannachse entspricht.

8. System nach einem der Ansprüche 2 bis 7, **dadurch gekennzeichnet, dass** die Adapter (11, 11', 11a, 11a') formschlüssig auf der Innenseite (5) der Ausfallenden (2, 2') mit diesen bündig abschließen.

9. System nach einem der Ansprüche 5 bis 8, **dadurch gekennzeichnet, dass** sich die Ausnehmung (6) auf der Innenseite (5) der Ausfallenden (2,2') um die Bohrung (4, 4a) in den Ausfallenden (2, 2') herum erstreckt.

10. System nach einem der Ansprüche 5 bis 9, **dadurch gekennzeichnet, dass** die Ausnehmung (6) eine kreisförmige Ausbuchtung (8) aufweist.

11. System nach Anspruch 10, **dadurch gekennzeichnet, dass** die Adapter (11, 11', 11 a, 11a') durch eine Schraube (13) in dem Bereich der Ausbuchtung (8) der Ausnehmung (6) mit dem Ausfallende (2, 2') verschraubbar sind.

12. System nach einem der Ansprüche 2 bis 11, **dadurch gekennzeichnet, dass** das System ein Schaltauge (12) umfasst und das Schaltauge (12) einstückig mit einem Adapter (11', 11a') ausgebildet ist.

13. System nach einem der Ansprüche 1 bis 12, **dadurch gekennzeichnet, dass** ein ein Außengewinde (15a) aufweisender Einsatz (15) vorgesehen ist, (Gewindeeinsatz) der mit einem Ausfallende (2,2') verschraubbar ist.

14. System nach Anspruch 13, **dadurch gekennzeichnet, dass** die Gewindeeinsätze (15) eine Gewindebohrung (15b) aufweisen und verschiedene Gewindeeinsätze (15) vorgesehen sind, deren Gewindebohrung (15b) jeweils komplementär zu einem der verschiedenen Außengewinden der Achsen ist.

15. Fahrrad mit Fahrradachsbefestigungssystem nach einem der Ansprüche 1 bis 14.
